# EUROPEAN PATENT SPECIFICATION

(11) **EP 0 741 288 B1**
(45) Date of publication and mention of the grant of the patent: **28.08.2002**
(21) Application number: 96201242.3
(22) Date of filing: 06.05.1996
(51) Int. Cl.: G01M 3/32

(54) **Method and apparatus for testing at least one flexible package for the presence of a leak**
Leckprüfverfahren und -vorrichtung für mindestens eine flexibele Verpackung
Procédé et appareil d'essai de fuite d'au moins un emballage flexible

(30) Priority: 04.05.1995 NL 1000311
(43) Date of publication of application: 06.11.1996
(73) Proprietor: Sara Lee/DE N.V., 3532 AA Utrecht (NL)
(72) Inventor: Aarts, Mathias Leonardus C., 3733 HN Bildhoven (NL); Smit, Arjan Tonnis, 3941 DC Hoorn (NL)
(74) Representative: Smulders, Theodorus A.H.J., Ir.

(56) References cited:
- EP-A- 0 152 981
- GB-A- 840 294
- US-A- 4 697 452

## Description

The invention relates to a method for testing at least one gastight package filled with a particular product for the presence of a leak, in which the package to be tested is placed in a gas and/or liquid-tight envelope, which comprises a sheet-shaped surface, a pressure difference between the pressure on the outside and the pressure on the inside of at least a portion of the envelope is produced, so that at least a portion of the envelope comes to lie closely against the package and in which a pressure present in the space between the package and the envelope is measured for obtaining test results, wherein the package is placed between a first and a second opposite disposed sheet-shaped flexible surface, at least a portion of the first sheet-shaped surface and at least a portion of the second sheet-shaped surface (4) are moved towards each other, so that these portions touch each other and said sheet-shaped surfaces in combination constitute said envelope at least during measurement, while at least one sheet-shaped surface is tightened along the package as a result of said pressure difference.

This invention also relates to an apparatus for testing at least one package for the presence of a leak in that package, said apparatus comprising a sheet-shaped, gas and/or liquid-tight envelope, which comprises a sheet-shaped surface and in which the package to be tested is placed for the purpose of performing the test, pressure means for producing a pressure difference between the pressure on the outside and the pressure on the inside of at least a portion of the envelope, so that in use at least a portion of the package is tightly enveloped by the envelope, and sensor means for measuring a pressure present in the space between the package and the envelope for the purpose of obtaining test results, wherein the apparatus comprises a first and second oppositely disposed sheet-shaped flexible surface between which, in use, a package to be tested is placed and means for moving at least a portion of the first sheet-shaped surface and at least a portion of the second sheet-shaped surface towards each other, so that these portions touch each other and said sheet-shaped surfaces in combination constitute said envelope at least during measurement, with at least one sheet-shaped surface being tightened along the package as a result of the pressure difference generated with the pressure means.

Such a method and apparatus are known from EP-A-0,0332,239 and EP-A-0,152,581.

In these publications, the package to be tested is placed in a sack-shaped envelope with an open end. After the package has been placed in the sack, the open end of the sack is closed off with a cover for further carrying out the test. A disadvantage of this test is that it takes much time to place the package in the sack and thereafter to close the sack. A further disadvantage is that the sack is only suitable for testing a package of specific shape and dimensions. If packages of a different kind are to be tested, the shape and dimensions of the sack will generally have to be adapted. A further drawback is that the sack is only suitable for testing one package at a time.
The method according to the invention overcomes these disadvantages and is characterized in that at least one of the sheet-shaped surfaces forms part of a flexible surface of a gas-filled container.

Because the envelope is constituted by an assembly of the sheet-shaped flexible surfaces, the package can be positioned in the envelope in a simple manner, since the package need only be positioned between the two surfaces, whereafter the surfaces are pressed towards each other while the package is properly disposed between the two surfaces. This involves an operation which can be carried out very fast. In contrast with the method according to EP-A-00332239 and EP-A-0152,581, the entire package can be surrounded by the flexible surfaces. The packages to be tested can for instance be a vacuum package which has been filled with a granular material such as ground coffee. It is also possible, however, to leak-test a can in which a food is contained. If the package to be tested is flexible and is partly filled with a non-gaseous product, so that a gas-containing, non-filled portion is present in the package, the method according to the invention is also suitable for performing the test.

The method is then characterized in that with the envelope such a pressure is exerted on the package that the volume in the package is reduced and the internal pressure in the non-filled portion of the package is increased.

Preferably, the pressure difference referred to, as a result of which the package is enveloped with a close fit and at which measurement takes place, is at least obtained by pressing the two sheet-shaped surfaces towards each other. Then the package is, for instance, positioned between the two sheet-shaped surfaces, whereafter these surfaces are moved towards each other, with the result that the package is clamped between the two surfaces and is subjected to pressure. There may already be a pressure difference between the inside and the outside of the cushion surface before the package is clamped. This pressure difference can subsequently rise when the package is clamped by moving the containers towards each other or by moving a container and an opposite disposed sheet-shaped surface towards each other.

It is also possible, however, that the package is positioned between the two sheet-shaped surfaces, whereafter the pressure in the at least one container is increased, so that the package is enveloped with a close fit for the purpose of performing the measurement. It is also possible that, in combination, the containers are moved towards each other and the pressure in at least one of the containers is increased for enveloping the package with a close fit and obtaining the pressure difference at which the package is tested. An apparatus according to the invention is characterized in that the apparatus comprises at least one gas-filled container with a flexible surface of which one of said sheet-shaped surfaces forms a part.

GB-A-840294 discloses an apparatus wherein the measuring space is formed by a combination of a flexible sack and a table.

The invention will be further explained with reference to the drawings, wherein:
Figs. 1a and 1b schematically show a first embodiment of an apparatus according to the invention;
Fig. 1c shows a first possible elaboration of the apparatus according to Figs. 1a and 1b;
Fig. 1d shows a second possible elaboration of the apparatus according to Figs. 1a and 1b;
Fig. 2a shows a second embodiment of an apparatus according to the invention;
Fig. 2b shows the apparatus according to Fig. 2a in a position where a package is being tested;
Fig. 3 shows a third embodiment of an apparatus according to the invention;
Fig. 4 shows a fourth embodiment of an apparatus according to the invention;
Fig. 5 shows a fifth embodiment of an apparatus according to the invention;
Fig. 6 shows a possible course of the pressure in a measuring space of the apparatuses according to Figs. 1, 2, 3, 4; and
Fig. 7 shows an alternative possible course of the pressure in a measuring space of the apparatuses according to Figs. 1, 2, 3, 4, with the pressure in the measuring space having been reduced.

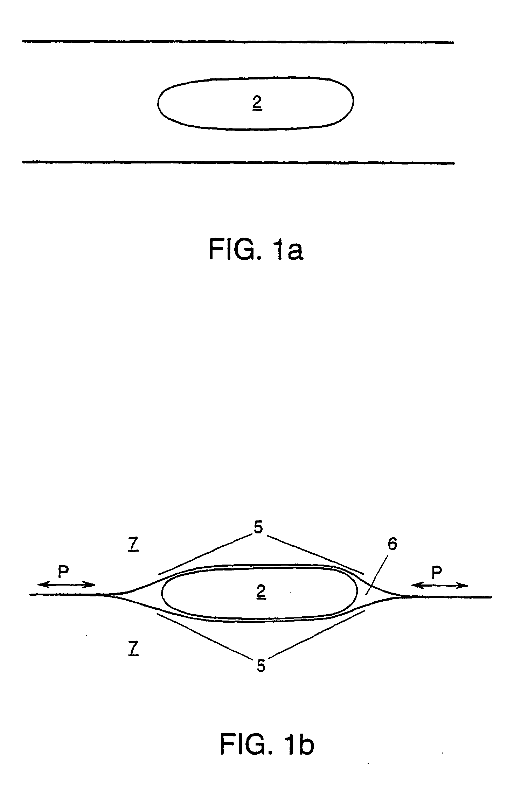

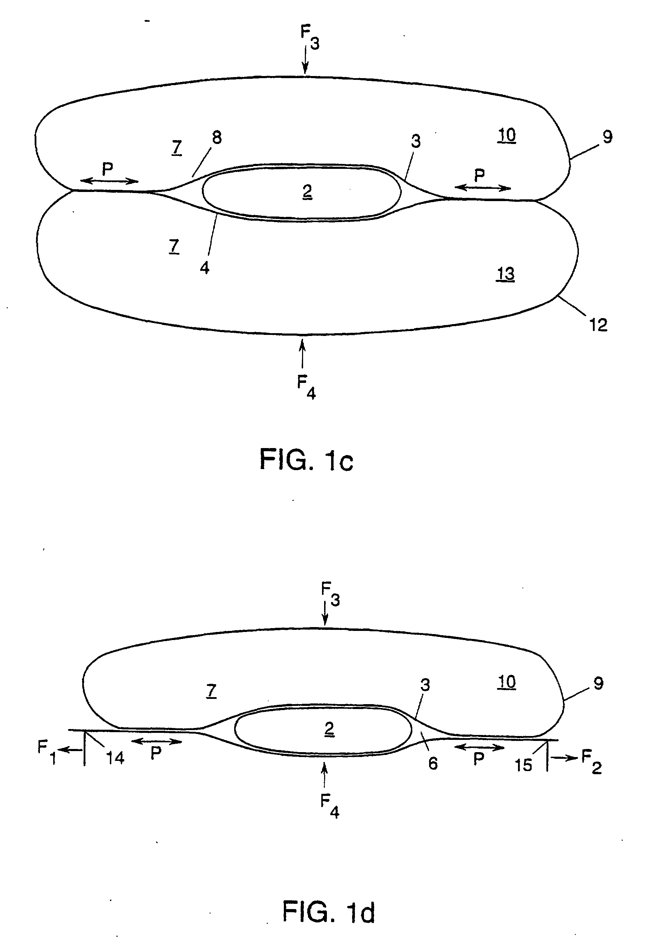

Figs. 1a-1d schematically show the operation of an apparatus 1 according to the invention for determining a leak in a package 2. In this example, the package 2 is filled with peanuts and air. The pressure inside the package 2 such as it is shown in Fig. 1a will be at least substantially atmospheric. The apparatus according to Fig. 1 comprises a first flexible sheet-shaped surface 3 and a second flexible sheet-shaped surface 4. The package 2 has been placed between the first 3 and the second 4 surface. Because the first and second surfaces 3, 4 as shown in Fig. 1a are spaced apart some distance, the package 2 can rapidly and easily be placed between the two sheet-shaped surfaces for the purpose of performing the test. The two sheet-shaped surfaces 3, 4 are made, for instance, of a thin flexible foil. 'Flexible' is here understood to mean that the sheet-shaped surfaces 3, 4 can be stretched slightly without tearing. Also, the sheet-shaped flexible surfaces 3, 4 can bend without breaking. Accordingly, the sheet-shaped surfaces 3, 4 are preferably made of natural rubber or a material having comparable properties. The thickness of the sheet-shaped surfaces is, for instance, 1 mm.

When the package 2 has been placed between the two oppositely disposed sheet-shaped flexible surfaces 3, 4, at least a portion of the first surface 3 and at least a portion of the second surface 4 are moved towards each other, so that these portions touch. The portions in question are indicated in Fig. 1b by the arrow P. Because the above-mentioned portions of the first and second surfaces 3, 4 touch, these surfaces in combination constitute an envelope 5 in which the package 2 to be tested is disposed. Located outside the package 2 and inside the envelope 5 is a measuring space 6. The above-mentioned portions of the first and second sheet-shaped surfaces, respectively, indicated by the arrow P, touch each other in such a manner that the measuring space 6 is hermetically sealed from the exterior world. For performing the measurement, it is necessary to produce a pressure difference between the pressure on the outside 7 and the pressure on the inside 6 of the envelope. As a result, at least a portion of the envelope 5 will come to lie closely against the package 2. This is realized through the further elaboration of the apparatus according to Fig. 1b such as it is shown in Fig. 1c. In Fig. 1c the flexible surface 3 is part of a cushion surface 8 of a container 9. The container 9 is an airtight envelope in which a gas 10 is contained. The second sheet-shaped surface 4 is likewise part of a cushion surface 11 of a gas-filled container 12. The container 12 is likewise a gastight envelope in which a gas 13 is provided. For performing the measurement, a pressure difference between the pressure on the outside 7 and the pressure on the inside 6 of the envelope 5 is produced. This can for instance be effected by increasing the pressure of the gas in the container 9. It is also possible to increase the pressure of the gas 13 in the container 12. The result is that at least a portion of the envelope 5 comes to lie closely against the package 2. For performing the test, the next step is to measure the course of the pressure over time in the space 6 between the package 2 and the envelope 5, for obtaining test results. The pressure difference between the inside 6 and the outside 7 of the envelope has been raised to such an extent that the envelope reduces the volume in the package 2 and increases the internal pressure in the non-filled portion of the package. The pressure in the containers 9, 12 is then approximately equal to the pressure in the package 2. The space 6 now forms a measuring space. If the pressure in the measuring space 6 rises, the package 2 has a leak. With the aid of a pressure sensor the course of the pressure in the measuring space 6 can be simply registered. An additional advantage of the apparatus according to the invention is that due to the fact that the envelope 5 comes to lie closely against the package 2, the volume of the measuring space 6 is minimised. This means that only a little gas needs to escape from the leaking package 2 to effect a clear pressure change in the measuring space 6.

Fig. 1d shows an alternative further elaboration of the apparatus according to Fig. 1b. The first flexible sheet-shaped surface 3, as in Fig. 1c, is again part of a gas-filled container 9. The second sheet-shaped flexible surface 4 is tautened by subjecting two portions 14, 15 of the sheet-shaped surface 4 to forces F1, F2, respectively, which are oppositely directed and are directed in the plane V of the sheet-shaped surface 4. As a result, the second sheet-shaped surface 4 is also tightened along the package 2. In the apparatus according to Fig. 1d, too, it holds that portions P of the first and second sheet-shaped surfaces 3, 4 are pressed against each other, in such a manner that the measuring space 6 is again sealed airtightly from the external world. For performing the measurement, the pressure of the gas 10 in the container 9 is again raised. As a result of all this, the envelope 5 comes to lie tightly against the package 2, again giving rise to a pressure difference between the inside 6 of the envelope and a portion 7 of the outside of the envelope. As a result of all this, due to the forces F1 and F2 on the one hand and the pressure applied in the container 9 on the other, again at least a portion of the envelope 5 comes to lie closely against the package 2.

For the sake of completeness, it is noted that the above-mentioned pressure difference in the apparatus according to Fig. 1c can also be obtained by reducing the pressure in the measuring space 6. For the apparatus according to Fig. 1d too, it holds that the above-mentioned pressure difference can be obtained by reducing the pressure in the measuring space 6. For the apparatus according to Fig. 1c as well as the apparatus according to Fig. 1d, it holds that the above-mentioned pressure difference can also be obtained by pressing the first and the second sheet-shaped flexible surfaces 3, 4 against each other. In the embodiment according to Fig. 1c, this can for instance be realized by exerting a force F3 on the outside of the container 9 and a force F4 on the outside of the container 12, with these two forces being directed in opposite directions. In the embodiment according to Fig. 1d too, a force F3 can be exerted on the outside of the container 9 for obtaining a similar result. A force F4 which presses the flexible surface 4 in the direction of the flexible surface 3 is a resultant of the oppositely acting forces F1 and F2.

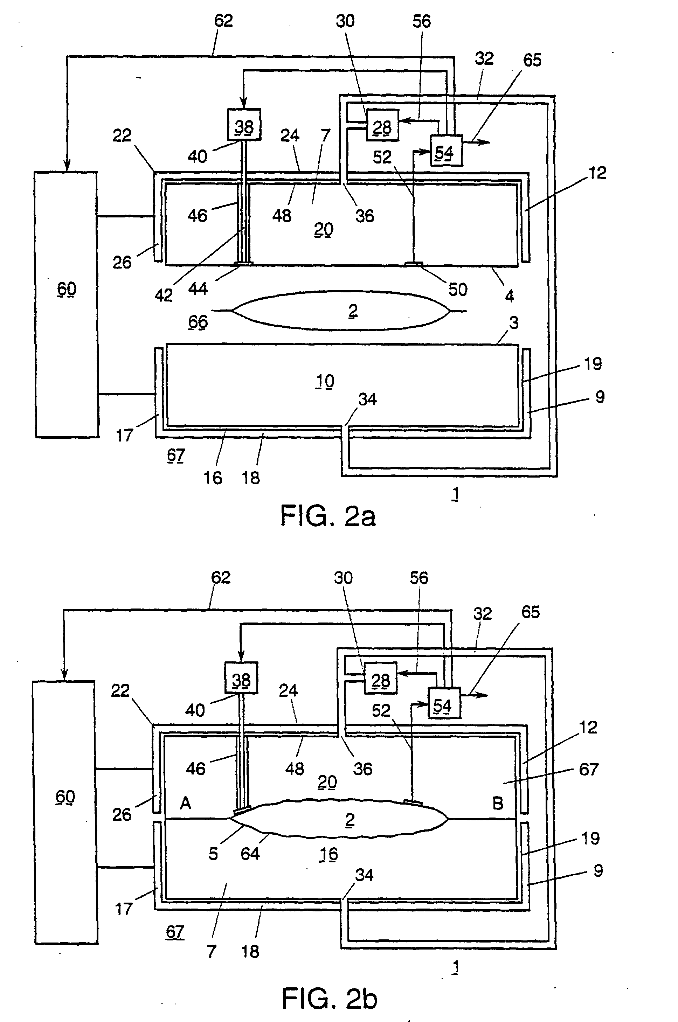

Figs. 2a and 2b schematically show in vertical cross section a particular embodiment of the apparatus 1 for determining a leak in the package 2. In this example the package 2 is filled with peanuts and air. The pressure inside the package 2 such as it is shown in Fig. 2a will be at least substantially atmospheric. The apparatus according to Figs. 2a and 2b comprises a first container 9 and a second container 12. The first container 9 comprises at the top thereof a sheet-shaped flexible surface 3. Similarly, the second container 12 comprises at the bottom thereof a sheet-shaped flexible surface 4. The sheet-shaped surface 3 in this example is a portion of a cushion 16 filled with a liquid or gaseous medium 10, which cushion 16 is placed in a rigid frame 17 of the container 9. The rigid frame 17 can for instance be made of metal and in this example comprises a rectangular bottom plate 18 with four upright sidewalls 19, the arrangement being such that the cushion 16 fits snugly in the frame 17. The sheet-shaped surface 3 is disposed at approximately the same height as the free end of the upright sidewalls 19. The second container 12 likewise comprises a cushion 20 and a frame 22 with a bottom plate 24 and four sidewalls 26, as has been described in relation to the first container 9.

The apparatus further comprises a pump 28 whose outlet 30 is connected via lines 32 with openings 34, 36 of the first cushion 16 and the second cushion 20, respectively. The apparatus furthermore comprises a second pump 38 whose inlet 40 is connected with a line 42. The line 42 has an open end 44 which in this example is situated adjacent the sheet-shaped surface 4. The course of the line 42 is represented only diagrammatically in Fig. 2. Thus, it is for instance possible that the bottom plate 24 comprises a passage through which the line 42 has been passed. In the container the line 42 can for instance extend around the cushion 20 in order that the open end 44 of the line is situated at or adjacent the sheet-shaped surface 4. However, it is also possible, for instance, that the cushion 20 is provided with a channel 46 with an open end at the sheet-shaped surface 4 and an open end at the cushion's parallel surface 48 located opposite the sheet-shaped surface. It will be clear that the line 42 can be passed through the channel 46 in a simple manner in order that the open end 44 of the line 42 is situated adjacent the open end of the channel 46 in the sheet-shaped surface 4.

The apparatus further comprises a pressure sensor 50 for measuring gas pressure. The pressure sensor 50 is of a generally known type and generates an output signal which corresponds with the measured air pressure, which output signal is fed via line 52 to a control unit 54, likewise forming part of the apparatus. It will be clear that the signal transported through the channel 52 can be of an electric as well as a pneumatic nature. The control unit 54 controls the first pump 28 and the second pump 38 via lines 56 and 58, respectively.

The operation of the system is as follows. The package 2 to be tested is positioned between the first and second sheet-shaped surfaces 3, 4. This can be carried out very quickly, for instance by placing the package 2 on the surface 3 of the container 9. Then the first and second containers 9, 12 are moved toward each other until the free ends of the upright sidewalls 19, 26 of the first and second containers, respectively, touch each other at least substantially (see also Fig. 2b). Moving the first 9 and the second container 12 toward each other can be effected with a drive unit 60, known per se, and is shown only diagrammatically in the drawing. The drive 60 in this example is controlled by the control unit 54 via line 62. The control unit 54 also activates the pump 28 via line 50. The pump 28 will thereafter supply compressed air to the cushions 16 and 20 via line 32. As a result, the pressure inside the container, that is, inside the cushions in this example, will rise. The pressure inside the cushions 16, 20 will be greater than the pressure outside the cushions 16, 20. As a consequence, the flexible sheet-shaped surface 3 and the flexible sheet-shaped surface 4 will bear on the package 2 with a close fit. At the positions designated A and B in Fig. 2b, the surfaces 3 and 4 will be pressed against each other. The result is that the package 2 is disposed in an envelope 5 formed by a combination of coacting surfaces 3 and 4. The pressure difference between the inside 6 and the outside 7 (in this example the interiors of the cushions 16 and 20) of the envelope 5 is so great that the envelope 5 reduces the volume in the package 2 and increases the internal pressure in the non-filled portion of the package 2. Also, the portions A and B of the surfaces 3 and 4 are pressed against each other with such force that the interior 6 is sealed airtightly from the ambient space 67 outside the container. The pressure in the cushions 16, 20 is then approximately equal to the pressure in the package 2. The space 6 between the envelope formed by the cushion surfaces now forms a measuring space. If after the measuring space 6 has been formed the pressure in the measuring space 6 rises, the package 2 leaks. With the aid of the sensor 50 the course of the pressure in the measuring space 6 is measured. The control unit 54 will generate an alarm signal on line 65 when the package 2 is found to leak.

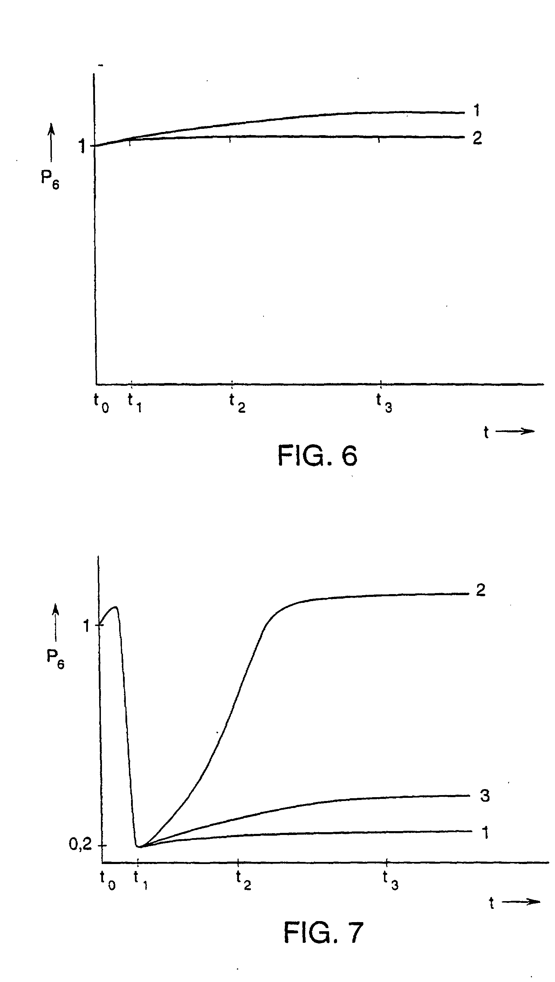

Fig. 6 shows the course of the pressure in the measuring space 6. Initially, at time to the pressure in the measuring space 6 will be atmospheric. However, when the measuring space 6 is sealed from the ambient space 67 while further the package is subjected to pressure by means of the pump 38, the pressure in the measuring space 6 will increase slightly until at time t₁ a maximum is achieved when the pressure inside the cushions is not further raised in that no compressed air is supplied to the cushions anymore. The amount of air in the cushions is then maintained unchanged. If the package leaks, the air pressure in the measuring space 6 will increase as shown by curve 1, whereas if the package does not leak, the pressure in the measuring space 6 will, at least substantially, not increase, as shown by curve 2. It appears that it can already be established at time t₂ whether the package in question leaks. The measuring interval t₂ - t₁ in this example is only 1 sec. During this very short measuring interval, it is possible to establish whether the package in use will exhibit extremely small leakage phenomena after one day. If the measurement occurs at time t₃, it is even possible to detect packages that have a leak which will not become manifest in use until after about 6 days. The measuring interval t₃ - t₁ is then about 6 sec.

If the package 2 has been tested, the control unit 54 will control the drive unit 60 in order that the first and second containers 9, 12 be moved apart. The package 2 can then be removed. For the sake of completeness, it is noted that moving the first and second containers toward each other can be effected concurrently with, before or after the supply of compressed air to the cushions 16 and 20.

According to a particular variant of the invention, the pressure in the measuring space 6 is reduced by the pump 38. This is to say that after the coacting sheet-shaped surfaces 3 and 4, forming the above-mentioned envelope 5, have formed the measuring space 6 in which the package 2 to be tested is disposed, the pressure in the measuring space 6 is reduced with the aid of the pump 38 to, for instance, 0.2 atm. It will be clear that, as a result, the pressure difference between the inside 6 of the envelope 5 and the outside 7 of the envelope 5 will further increase, with the result that the volume in the package is further reduced by the envelope 5 and the internal pressure in non-filled portions of the package 2 is further increased. The pressure in the cushions 16 and 20 will then be approximately 1.2 atm. Thereafter, again the course of the pressure in the measuring space 6 is measured to determine whether the package 2 leaks. It now holds that the pressure in the measuring space will rise very considerably when the package leaks, while the pressure in the measuring space will, at least substantially, not rise when the package does not leak. Because the pressure in the measuring space has been reduced, only a small amount of gas needs to escape from the package to cause the pressure in the measuring space 6 to increase significantly.

All this is illustrated with reference to Fig. 7. At t₀ the measuring space 6 is still in open communication with the environment 67, so that the air pressure will be approximately 1 atm. After the measuring space 6 has been sealed from the environment, while, for instance, some more compressed air is being supplied to the cushions, the pressure in the measuring space will still rise slightly. When thereupon no compressed air is supplied to the cushions anymore, while moreover the pressure in the measuring space 6 is reduced by the pump 38, the pressure in the measuring space 6 at time t₁ will be approximately 0.2 atm. The pressure in the cushions 16, 20 is then approximately equal to the pressure in the package 2. From time t₁, the control unit 34 will switch off the pump 38. If the package leaks, the pressure in the measuring space 6 will proceed to rise as shown by curve 2 of Fig. 7. If the package does not leak, the pressure will remain at least substantially equal, as shown by curve 1 of Fig. 7. Now, too, it holds that a measuring interval of t₂ - t₁ = 1 sec is sufficient to detect a package 2 which will start to exhibit leakage phenomena in use after one day. If the measurement proceeds for a measuring interval of t₃ - t₁ = 6 sec, packages can be detected which in use will not exhibit phenomena indicative of leakage until after 6 days. The course of the pressure in the measuring space 6 in the case of such a package is shown by curve 3 in Fig. 7.

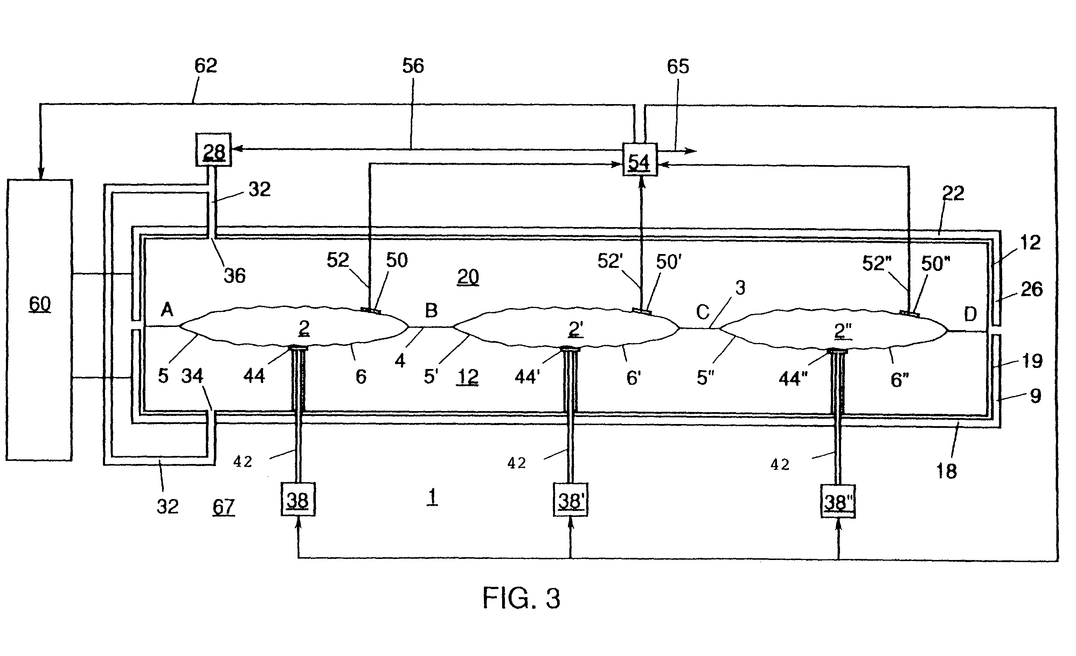

In all of the above-described embodiments it is also possible that no compressed air is supplied to the cushions 16 and 20. In that case, the cushions 16 and 20 have been provided once with an amount of air where the pressure in the cushions is approximately 1.2 atm. According to this variant, therefore, the pump 28 and the line 32 can be omitted. Measuring the course of the pressure in the measuring space 6 from time t₁, however, is maintained unchanged. These variants are all understood to fall within the scope of the invention. Fig. 3 shows an alternative embodiment of an apparatus according to Fig. 2, where corresponding parts have been given the same reference numerals. In the apparatus according to Fig. 3, when with the aid of the drive 60 the first and second containers 9, 12 have been moved apart, a first package 2 is placed between positions A and B, a second package 2' is placed between positions B and C, and a third package 2" is placed between positions C and D. Then the control unit 54 will generate a signal via line 62, so that the drive 60 is activated and the first container 9 is moved toward the second container 12. Also, as discussed in relation to Fig. 2, the control unit 54 will activate the pump 28 via line 56. The pump 28 will supply compressed air to the first cushion 16 and the second cushion 20. As a result of all this, each of the packages 2, 2', 2" will be enveloped by a combination of the flexible sheet-shaped surfaces 3 and 4. At the positions A, B, C and D, the surfaces 3 and 4 will be pressed against each other with a tight fit and airtightly. Thus a first envelope 5 is formed around the package 2. Present between the envelope 5 and the package 2 is a measuring space 6 which is sealed from the environment 67. Similarly, around the package 2' a second envelope 5' is formed by a portion of the surfaces 3 and 4. Located between this second envelope 5' and the second package 2' is a second measuring space 6'. It will be clear that in a similar manner a third envelope 5" has been formed around the third package 2", with a third measuring space 6". It is moreover essential that the first measuring space 6, the second measuring space 6' and the third measuring space 6" are airtightly separated from each other. With the aid of the pressure sensor 50, it is then possible to measure the course of the pressure in the first measuring space 6 to determine whether the first package 2 leaks. The possible course of the pressure in the measuring space 6 is entirely analogous to that described with reference to Fig. 6. Similarly, with the aid of the second pressure sensor 50', the course of the pressure in the second measuring space 6' can be measured to determine whether the second package 2' leaks. In this case too, curve 2 of Fig. 7 shows the course of the pressure for a package that leaks and curve 1 shows the course of the pressure for a package that does not leak. Finally, using the third sensor 50" the course of the pressure in the third measuring space 6" can be measured to determine in a similar manner whether the third package 2" leaks. Via lines 52, 52' and 52" the measuring results of pressure sensors 50, 50' and 50", respectively, are fed to the control unit 54 to determine whether the packages 2, 2' and 2", respectively, leak. Via line 65 a signal can be delivered to indicate which of the packages leak.

It will be clear that it is moreover possible to reduce the pressure in the first measuring space 6, in the second measuring space 6' and in the third measuring space 6" to 0.2 atm. with the aid of a pump 38, as has been discussed in relation to the apparatus according to Fig. 2. In that case the course of the pressure for each of the spaces 6, 6', 6" will correspond with the curves as shown in Fig. 7. According to a particular variant, package 2 is, for instance, a reference package which is known not to leak. In that case, the control unit 54 will compare the course of the pressure in the measuring space 6 with the course of the pressure in the measuring space 6' and the course of the pressure in the measuring space 6". If, for instance, the course of the pressure in the measuring space 6' differs greatly from the course of the pressure in the measuring space 6, it can be concluded that the package 2' apparently leaks. A similar consideration holds for the package 2" with regard to the course of the pressure in the measuring space 6".

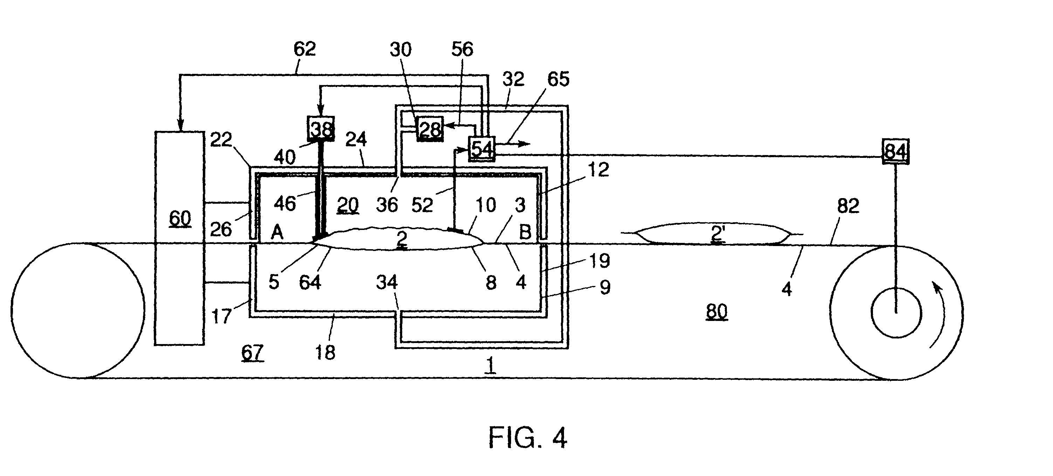

Fig. 4 shows an alternative embodiment of an apparatus according to the invention. In Fig. 2 and Fig. 4, corresponding parts have been provided with the same reference numerals. The apparatus comprises a conveyor unit 80 on which are disposed packages 2, 2' etc. to be tested. The container 12 in this example comprises a cushion 20 which corresponds with the cushion according to Fig. 2. The container 12 likewise comprises a line 42 for reducing the pressure in a measuring space 6, the line 32 for supplying compressed air to the cushion 20 and a sensor 50 for measuring pressure changes in the measuring space 6. For the first container 9, however, it holds that the cushion 16 has been omitted. The conveyor unit in this example comprises a sheet-shaped flexible conveyor belt 82. In this example, the upper run of the conveyor belt 82 passes between the first container 9 and the second container 12. In other words, the containers 9 and 12 are arranged on opposite sides of the conveyor belt 82. Again, the containers 9 and 12 can be moved away from and towards each other, using a drive unit 60. Also, through line 32 and using pump 28, compressed air can be supplied to the inside of the container 9. The operation of the system is as follows.

Through movement of the conveyor belt 82, the conveyor unit 80 conveys the package 2 to be tested to a position between the first and the second container 9, 12. When the package 2 to be tested is disposed in this position, the conveyor belt 82 is temporarily stopped. The conveyor belt may to that end comprise a motor 84 which is controlled by the control unit 54. The control unit 54 accordingly stops the conveyor belt 82 at the proper time. Then the control unit 54 activates the drive unit 60, so that the first and second containers 9, 12 are moved towards each other. In this example the upright edges 19 and 26 are pressed against each other, with the conveyor belt 82 being disposed between these edges. Then the control unit 54 activates the pump 28, so that compressed air is supplied to the cushion 20. Also, compressed air is supplied to the space inside the container 9. Due to the above-mentioned free ends of the upright edges 26, 19 being pressed against each other, the result achieved is that the conveyor belt 82 forms an airtight connection with the upright edges 19 of the first container 9. As a result of all this, the portion of the conveyor belt 82 located between the two containers 9, 12 will function as the above-mentioned flexible sheet-shaped surface 4. The sheet-shaped surface 3 of the cushion 20 and the sheet-shaped surface 4 of the conveyor belt 82 will enclose the package 2 tightly, in such a manner that the volume in the package is reduced and the internal pressure in the non-filled portion of the package is increased. Accordingly, an envelope is formed which encloses the package 2. This envelope consists of a portion of the cushion 20 and a portion of the conveyor belt 82. As a result of all this, a measuring space 6 is formed between the envelope 5 and the package 2, which measuring space 6 is sealed airtightly from the environment 67. Thereafter, with the aid of the pump 38 the pressure in the measuring space can be reduced to measure the course of the pressure in the measuring space 6 with the aid of the sensor 50 and to determine whether the package 2 leaks. The corresponding curves for a possible course of the pressure are shown in Fig. 7. It will be clear that it is also possible not to reduce the pressure in the measuring space 6. In that case, it can be determined on the basis of the curves according to Fig. 6 whether the package 2 leaks. After the measurement has been performed with the aid of the sensor 50, the control unit 54 activates the drive 60 so that the first and second containers 9, 12 are moved apart. Thereafter the control unit 54 controls the motor 84 so that the package 2 is conveyed further and a new package 2' can be tested in a corresponding manner. If the control unit 54 has established that the package 2 leaks, it can activate means to take the package 2 in question off the conveyor unit 80.

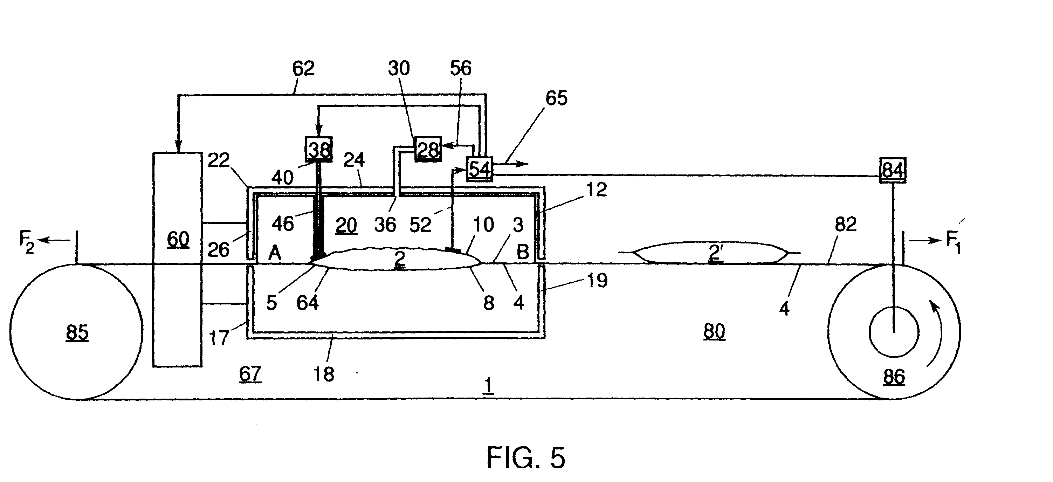

Finally, Fig. 5 shows a fifth embodiment of an apparatus according to the invention, in which parts corresponding with Fig. 4 have been provided with the same reference numerals. In this example the conveyor belt 82 is tensioned by the conveyor gears 85, 86. The gears 85 and 86 therefore constitute means for respectively exerting oppositely directed forces on two portions of the sheet-shaped surface 4, so that the sheet-shaped surface 4 (corresponding with the conveyor belt 82) is tightened. The operation of the system is as follows. Through a movement of the conveyor 82 the conveyor unit 80 conveys the package 2 to be tested to a position between the first and second sheet-shaped surfaces 3, 4. When the package 2 to be tested is disposed in this position, the control unit 54 stops the conveyor belt 82. Thereupon the control unit 54 activates the drive unit 60 so that the second container 12 is moved in the direction of the conveyor belt 82. This means that the first and second sheet-shaped surfaces 3, 4 are moved towards each other. In this example too, the upright edges 19 and 26 are pressed against each other, with the conveyor belt 82 disposed between these two edges. Then the control unit 54 activates the pump 28 so that compressed air is supplied to the cushion 20. Due to the above-mentioned free ends of the upright edges 26, 19 being pressed against each other, the result achieved is that the conveyor belt 82 forms an airtight connection with the upright edges 19. As a result of all this, the portion of the conveyor belt 82 located between the upright edges will function as the first above-mentioned flexible sheet-shaped surface 4. The sheet-shaped surface 3 of the cushion 20 and the sheet-shaped surface 4 of the conveyor belt 82 will envelop the package 2 tightly, in such a manner that the volume in the package is reduced and the internal pressure in the non-filled portion of the package is increased. Accordingly, again an envelope is formed which encloses the package 2. This envelope consists of a portion of the cushion 20 and a portion of the conveyor belt 82. As described in relation to Fig. 1d, the sheet-shaped surface 4 is tightened along the package 2 by the oppositely directed action of the forces F1 and F2. By contrast, the sheet-shaped surface 3 is tightened along the package 2 by the pressure applied in the cushion 20. The determination of whether the package 2 leaks can further be carried out in a manner entirely analogous to that described in relation to Fig. 4. In this connection it is noted that it is also possible, as in Fig. 4, to reduce the pressure in the measuring space 6 for obtaining the pressure difference referred to, instead of raising the pressure in the cushion 20. For the sake of completeness, it is noted that the apparatuses described hereinbefore are also suitable for checking whether a product received in a rigid package leaks. Examples include a vacuum package filled with granular material such as coffee or a can or pot filled, for instance, with a food product. Again, if the can leaks, a little gas will escape from it. By virtue of the fact that with all of the above-mentioned embodiments the measuring space is relatively small owing to the close abutment of the envelope, such a small amount of gas which has escaped will be detectable in the measuring space. In particular when the pressure in the measuring space is reduced (see Fig. 7), an accurate test can be carried out. If a vacuum package is tested for leakage, the pressure in the measuring space will, by contrast, decrease in case of a leak, since a leaking vacuum package will draw in air from the measuring space. These and other obvious variants of the above described embodiments are all understood to fall within the scope of the invention as defined by the appended claims.

## Claims

1. A method for testing at least one gastight package (2) filled with a particular product for the presence of a leak, in which the package to be tested is placed in a gas and/or liquid-tight envelope (5), which comprises a sheet-shaped surface (3,4), a pressure difference between the pressure on the outside and the pressure on the inside of at least a portion of the envelope (5) is produced, so that at least a portion of the envelope (5) comes to lie closely against the package (2) and in which a pressure present in the space (6) between the package (2) and the envelope (5) is measured for obtaining test results, wherein the package (2) is placed between a first and a second opposite disposed sheet-shaped flexible surface (3,4), at least a portion of the first sheet-shaped surface (3) and at least a portion of the second sheet-shaped surface (4) are moved towards each other, so that these portions touch each other and said sheet-shaped surfaces in combination constitute said envelope (5) at least during measurement, while at least one sheet-shaped surface (3,4) is tightened along the package (2) as a result of said pressure difference, **characterized in that** at least one of the sheet-shaped surfaces (3,4) is formed by a part of the outside of a flexible surface (8) of a gas-filled container (10).

2. A method according to claim 1, in which the package (2) to be tested is flexible and is partly filled with a non-gaseous product, so that a gas-containing non-filled portion is present in the package (2), **characterized in that** with the envelope (5) such a pressure is applied to the package (2) that the volume in the package (2) is reduced and the internal pressure in the non-filled portion of the package (2) is increased.

3. A method according to claim 1 or 2, **characterized in that** the second sheet-shaped surface (4) is tightened by exerting on two portions of the sheet-shaped surface (3,4) respective forces which are opposite directed and are directed in the plane of the last-mentioned surface.

4. A method according to claim 1, 2 or 3, **characterized in that** both sheet-shaped surfaces (3,4) each form part of a flexible surface (8,11) of a gas-filled container (9,12).

5. A method according to any preceding claim, **characterized in that** in the container (9,12) a superatmospheric pressure is present.

6. A method according to claim 5, **characterized in that** the superatmospheric pressure in the container (9,12) is present both prior to and during the inclusion of the package (2) in the envelope (5).

7. A method according to any preceding claim 1-4, **characterized in that** said pressure difference, as a result of which the package (2) is tightly enveloped and at which measurement occurs, is at least obtained by raising the pressure in the container (9,12).

8. A method according to any one of claims 1 or 7, **characterized in that** said pressure difference, as a result of which the package (2) is tightly enveloped and at which measurement occurs, is at least obtained by pressing the two sheet-shaped surfaces (3,4) towards each other.

9. A method according to any one of the preceding claims, **characterized in that** the pressure in the space (6) is reduced for obtaining said pressure difference at which measurement occurs.

10. A method according to any one of the preceding claims, **characterized in that** at least two packages (2,2',2") are brought between the two sheet-shaped surfaces (3,4) for obtaining as many envelopes (5,5',5"), while in each space (6,6',6") of an envelope (5,5',5") the pressure change is measured to test whether the package disposed in the envelope in question leaks.

11. A method according to claim 10, **characterized in that** at least one of the packages (2,2',2") placed between the two sheet-shaped surfaces (3,4) is a reference package (2), while the pressure change in the space (6,6',6") associated with the reference package is compared with the pressure change in the space associated with the package to be tested, to test whether the package leaks.

12. An apparatus (1) for testing at least one package (2) for the presence of a leak in that package (2), said apparatus (1) comprising a sheet-shaped, gas and/or liquid-tight envelope (5), which comprises a sheet-shaped surface (3,4) and in which the package (2) to be tested is placed for the purpose of performing the test, pressure means (28) (38) for producing a pressure difference between the pressure on the outside (7) and the pressure on the inside (6) of at least a portion of the envelope (5), so that in use at least a portion of the package (2) is tightly enveloped by the envelope (5), and sensor means (50) for measuring a pressure present in the space (6) between the package (2) and the envelope (5) for the purpose of obtaining test results, wherein the apparatus (1) comprises a first and second oppositely disposed sheet-shaped flexible surface (3,4) between which, in use, a package (2) to be tested is placed and means for moving at least a portion of the first sheet-shaped surface (3) and at least a portion of the second sheet-shaped surface (4) towards each other, so that these portions touch each other and said sheet-shaped surfaces in combination constitute said envelope (5) at least during measurement, with at least one sheet-shaped surface (3,4) being tightened along the package (2) as a result of the pressure difference generated with the pressure means (28)(38), **characterized in that** the apparatus (1) comprises at least one gas-filled container (9,12) with a flexible surface (8,11), a part of the outside of which forms one of said sheet-shaped surfaces (3,4).

13. An apparatus according to claim 12, **characterized in that** the apparatus further comprises a control unit (54) for controlling the pressure means (28)(38) and for further processing measuring results obtained with the sensor means (50).

14. An apparatus according to claim 13, with the package (2) to be tested being flexible and partly filled with a non-gaseous product so that a gas-containing non-filled portion is present in the package (2), **characterized in that** the control unit (54) controls the pressure means (28,38) in such a manner that with the envelope (5) such a pressure is exerted on the package that the volume in the package is reduced and the internal pressure in the non-filled portion of the package is increased.

15. An apparatus according to any one of the preceding claims 12-14, **characterized in that** the apparatus (1) comprises means (28,38) for respectively exerting opposite directed forces on two portions of one of said sheet-shaped surfaces, so that the sheet-shaped surface is tightened.

16. An apparatus according to claims 12-15, **characterized in that** the apparatus comprises two containers (9,12) which are each filled with a gas and comprise a flexible surface (8,11), a part of the outside of which forms one of said sheet-shaped surfaces (3,4).

17. An apparatus according to any preceding claim 12-16, **characterized in that** during measurement a superatmospheric pressure is present in the container (9,12).

18. An apparatus according to claim 17, **characterized in that** the superatmospheric pressure in the container (9,12) is present both prior to and during the inclusion of the package (2) in the envelope (5).

19. An apparatus according to claims 13, **characterized in that** the control unit (54) controls the pressure means (28,38) in such a manner that at least the pressure in the container (9,12) is raised for enclosing the package (2) in tightly enveloping abutment for obtaining said pressure difference at which measurement occurs.

20. An apparatus according to any one of the preceding claims 12-19, **characterized in that** the apparatus (1) further comprises movement means (60) for moving said sheet-shaped surfaces (3,4) away from and towards each other, while said pressure difference, as a result of which the package (5) is tightly enveloped and at which measurement occurs, is at least obtained by pressing the two sheet-shaped surfaces towards each other with the aid of the movement means (60).

21. An apparatus according to any one of the preceding claims 12-20, **characterized in that** with the aid of the pressure means (38) the pressure in the space can be reduced for obtaining said pressure difference at which measurement occurs.

22. An apparatus according to any one of the preceding claims 12-21, **characterized in that** the sensor means (50) comprises at least two mutually separate sensors (50) so that at least two packages (2,2',2") can be brought between the two sheet-shaped surfaces (3,4) for obtaining as many spaces (6,6',6")each comprising one of said sensors (50), while with the aid of the sensors (56) the pressure change in each individual space (6,6',6") can be measured to determine whether the package (2,2',2") in question leaks.

23. An apparatus according to any one of claims 12-22, **characterized in that** the sensor means are arranged in an opening of the sheet-shaped surface, in such a manner that a surface of the sensor means is at least substantially located in the sheet-shaped surface.

24. An apparatus according to any one of claims 12-23, **characterized in that** a sheet-shaped surface (3,4) is formed by a portion of a conveyor belt (82) by which the packages to be tested are conveyed.

25. An apparatus according to any one of the preceding claims 12-24, **characterized in that** the flexible surface (8,11) of the container (9,12) is formed by a portion of a conveyor belt (82) by which the packages (2,2',2") to be tested are conveyed.

## Patentansprüche

1. Ein Verfahren, um mindestens eine gasdichte Verpackung (2), die mit einem speziellen Produkt gefüllt ist, auf das Vorhandensein eines Lecks hin zu prüfen, in welchem die zu prüfende Verpackung in eine gas- und/oder flüssigkeitsdichte Hülle (5) eingebracht wird, welche eine folienartige Oberfläche (3, 4) besitzt, worin eine Druckdifferenz zwischen dem Druck an der Außenseite und dem Druck im Inneren in mindestens einem Bereich der Hülle (5) erzeugt wird, so dass wenigstens ein Bereich der Hülle (5) eng an die Verpackung (2) zu liegen kommt, und in welchem ein Druck, der in dem Zwischenraum (6) zwischen der Verpackung (2) und der Hülle (5) vorliegt, gemessen wird, um so Prüfergebnisse zu erhalten, worin die Verpackung (2) zwischen eine erste und eine zweite, einander gegenüberliegende, folienartige, flexible Oberfläche (3, 4) gebracht wird, worin wenigstens ein Bereich der ersten folienartigen Oberfläche (3) und wenigstens ein Bereich der zweiten folienartigen Oberfläche (4) aufeinander zu bewegt werden, so dass diese Bereiche sich berühren, und die Kombination besagter, folienartiger Oberflächen besagte Hülle (5) bildet, wenigstens während der Messung, während mindestens eine folienartige Oberfläche (3, 4), als ein Resultat besagter Druckdifferenz, entlang der Verpackung (2) gestrafft wird, was dadurch charakterisiert ist, dass mindestens eine der folienartigen Oberflächen (3, 4) von einem Teil der Außenseite einer flexiblen Oberfläche (8) eines mit Gas gefüllten Behälters (10) gebildet wird.

2. Ein Verfahren mit den Merkmalen aus Anspruch 1, in welchem die zu prüfende Verpackung (2) flexibel sowie teilweise mit einem nicht gasförmigen Produkt gefüllt ist, so dass in der Verpackung (2) ein Gas enthaltender, nicht gefüllter Bereich vorhanden ist, der dadurch charakterisiert ist, dass durch die Hülle (5) solch ein Druck auf die Verpackung (2) ausgeübt wird, dass das Volumen innerhalb der Verpackung (2) reduziert wird, und der interne Druck in dem nicht gefüllten Bereich der Verpackung (2) ansteigt.

3. Ein Verfahren mit den Merkmalen aus Anspruch 1 oder 2, das dadurch charakterisiert ist, dass die zweite folienartige Oberfläche (4) gestrafft wird, indem auf zwei Bereiche der folienartigen Oberfläche (3, 4) jeweils Kräfte in entgegengesetzter Richtung ausgeübt werden, die in die Ebene der zuletzt erwähnten, folienartigen Oberfläche gerichtet sind.

4. Ein Verfahren mit den Merkmalen aus Anspruch 1, 2 oder 3, das dadurch charakterisiert ist, dass beide folienartigen Oberfläche (3, 4) je einen Teil einer flexiblen Oberfläche (8, 11) eines gasgefüllten Behälters (9, 12) bilden.

5. Ein Verfahren mit den Merkmalen eines jeden der vorausgegangenen Ansprüche, dass dadurch charakterisiert ist, dass in dem Behälter (9, 12) Überdruck herrscht.

6. Ein Verfahren mit den Merkmalen aus Anspruch 5, das dadurch charakterisiert ist, dass der Überdruck in dem Behälter (9, 12) sowohl vor dem Einschließen der Verpackung (2) in die Hülle (5), als auch währenddessen, vorliegt.

7. Ein Verfahren mit den Merkmalen eines jeden der vorausgegangenen Ansprüche 1-4, dass dadurch charakterisiert ist, dass besagte Druckdifferenz, als deren Resultat die Verpackung (2) fest eingehüllt ist, und an der die Messung vorgenommen wird, mindestens durch das Anheben des Drucks in dem Behälter (8, 12) erreicht wird.

8. Ein Verfahren mit den Merkmalen eines jeden der Ansprüche 1 - 7, das dadurch charakterisiert ist, dass besagte Druckdifferenz, als deren Resultat die Verpackung (2) fest eingehüllt ist, und an der die Messung vorgenommen wird, mindestens dadurch erreicht wird, dass die zwei folienartigen Oberflächen (3, 4) aneinander gepresst werden.

9. Ein Verfahren mit den Merkmalen eines jeden der vorausgegangenen Ansprüche, das dadurch charakterisiert ist, dass der Druck in dem Zwischenraum (6) reduziert wird, um besagte Druckdifferenz an welcher die Messung vorgenommen wird, zu erhalten.

10. Ein Verfahren mit den Merkmalen eines jeden der vorausgegangenen Ansprüche, dass dadurch charakterisiert ist, dass mindestens zwei Verpackungen (2, 2', 2'') zwischen die zwei folienartigen Oberfläche (3, 4) gebracht werden, um genauso viele Hüllen (5, 5', 5'') zu erhalten, während in jedem Zwischenraum (6, 6', 6") einer Hülle (5, 5', 5'') die Änderung des Drucks gemessen wird, um zu prüfen, ob die Verpackung, die sich in der in Frage kommenden Hülle befindet, leckt.

11. Ein Verfahren mit den Merkmalen aus Anspruch 10, das dadurch charakterisiert ist, dass mindestens eine der Verpackungen (2,2', 2''), die zwischen die zwei folienartigen Oberflächen (3,4) eingebracht worden sind, eine Referenz-Verpackung (2) ist, während die Druckänderung in dem Zwischenraum (6,6',6"), der mit der Referenz-Verpackung assoziiert ist, mit der Druckänderung in dem Zwischenraum, der mit der zu prüfenden Verpackung assoziiert ist, verglichen wird, um zu prüfen, ob die Verpackung leckt.

12. Eine Vorrichtung (1), um damit mindestens eine Verpackung (2) auf das Vorhandensein eines Lecks in dieser Verpackung (2) hin zu prüfen, wobei besagte Vorrichtung (1) Folgendes beinhaltet: eine folienartige, gas- und/oder flüssigkeitsdichte Hülle (5), welche eine folienartige Oberfläche (3,4) besitzt, und in welche die zu prüfende Verpackung (2), zum Zweck der Durchführung der Prüfung, eingebracht wird, Druckerzeuger (28) (38) zur Erzeugung einer Druckdifferenz zwischen dem Druck an der Außenseite (7) und dem Druck im Inneren (6) in mindestens einem Bereich der Hülle (5), so dass bei der Benutzung mindestens ein Bereich der Verpackung (2) fest von der Hülle (5) umhüllt ist, und Sensor-Geräte (50), zur Messung eines Drucks, der in dem Zwischenraum (6) zwischen der Verpackung (2) und der Hülle (5) vorliegt, zu dem Zweck, ein Prüfergebnis zu erhalten, und worin die Vorrichtung (1) Folgendes beinhaltet: eine erste und eine zweite, einander gegenüberliegend angebrachte, folienartige, flexible Oberfläche (3, 4), zwischen welche bei der Benutzung eine zu prüfende Verpackung (2) eingebracht wird, und Hilfsmittel für die Bewegung von wenigstens einem Bereich der ersten folienartigen Oberfläche (3) sowie wenigstens einem Bereich der zweiten folienartigen Oberfläche (4) aufeinander zu, so dass diese Bereich einander berühren, und die Kombination besagter folienartiger Oberflächen, wenigstens während der Messung, besagte Hülle (5) ergibt, wobei mindestens eine folienartige Oberfläche (3, 4) als ein Resultat besagter Druckdifferenz, die mit den Druckerzeugern (28) (38) erzeugt worden, ist, entlang der Verpackung (2) gestrafft wird, was dadurch charakterisiert ist, dass die Vorrichtung (1) mindestens einen gasgefüllten Behälter (9, 12) mit einer flexiblen Oberfläche (8, 11), von der ein Teil der Außenseite eine der besagten, folienartigen Oberflächen (3, 4) bildet, beinhaltet.

13. Eine Vorrichtung mit den Merkmalen aus Anspruch 12, die dadurch charakterisiert ist, dass die Vorrichtung außerdem noch eine Kontrolleinheit (54) umfasst, um damit die Druckerzeuger (28) (38) zu kontrollieren, und um die Messungs-Ergebnisse, die mit den Sensor-Geräten (50) erhalten worden sind, weiter zu bearbeiten.

14. Eine Vorrichtung mit den Merkmalen aus Anspruch 13, bei der die zu prüfende Verpackung (2) flexibel und teilweise mit einem nicht gasförmigen Produkt gefüllt ist, so dass in der Verpackung (2) ein Gas enthaltender, nicht gefüllter Bereich vorhanden ist, der dadurch charakterisiert ist, dass die Kontrolleinheit (54) die Druckerzeuger (28, 38) auf eine Weise kontrolliert, dass mit der Hülle (5) ein solcher Druck auf die Verpackung ausgeübt wird, dass das Volumen in der Verpackung reduziert wird, und der interne Druck, in dem nicht gefüllten Bereich der Verpackung, ansteigt.

15. Eine Vorrichtung mit den Merkmalen eines jeden der vorausgegangenen Ansprüche 12-14, die dadurch charakterisiert ist, dass die Vorrichtung (1) Hilfsmittel (28, 38) beinhaltet, um damit jeweils entgegengesetzt ausgerichtete Kräfte auf zwei Bereiche einer der besagten folienartigen Oberflächen auszuüben, wodurch die folienartige Oberfläche gestrafft wird.

16. Eine Vorrichtung mit den Merkmalen der Ansprüche 12-15, die dadurch charakterisiert ist, dass die Vorrichtung zwei Behälter (9,12) beinhaltet, welche beide mit einem Gas gefüllt sind und über eine flexible Oberfläche (8,11) verfügen, von der eine der besagten, folienartigen Oberflächen (3,4) ein Teil bildet.

17. Eine Vorrichtung mit den Merkmalen jedes vorausgegangenen Anspruchs 12-16, die dadurch charakterisiert ist, dass während der Messung in dem Behälter (9,12) Überdruck herrscht.

18. Eine Vorrichtung mit den Merkmalen aus Anspruch 17, die dadurch charakterisiert ist, dass der Überdruck in dem Behälter (9,12) sowohl vor dem Einschliessen der Verpackung (2) in die Hülle (5), als auch währenddessen, vorliegt.

19. Eine Vorrichtung mit den Merkmalen der Ansprüche 13, die dadurch charakterisiert ist, dass die Kontrolleinheit (54) die Druckererzeuger (28,38) auf eine Weise kontrolliert, dass zumindest der Druck in dem Behälter (9,12) erhöht wird, um die Verpackung (2) in straff einhüllender Angrenzung einzuschliessen, um so besagte Druckdifferenz, an der die Messung erfolgt, zu erzeugen.

20. Eine Vorrichtung mit den Merkmalen eines jeden der vorausgegangenen Ansprüche 12-19, die dadurch charakterisiert ist, dass die Vorrichtung (1) ausserdem noch Hilfsmittel für die Bewegung (60) besagter folienartiger Oberflächen (3,4) voneinander fort und aufeinander zu beinhaltet, während besagte Druckdifferenz, als deren Resultat die Verpackung (2) straff eingehüllt wird, und an der die Messung erfolgt, zumindest dadurch erreicht wird, dass die zwei folienartigen Oberflächen mit Hilfe der Hilfsmittel für die Bewegung (60) aneinander gepresst werden.

21. Eine Vorrichtung mit den Merkmalen eines jeden der vorausgegangenen Ansprüche 12-20, die dadurch charakterisiert ist, dass mit der Hilfe der Druckerzeuger (38) der Druck in dem Zwischenraum verringert werden kann, um so besagte Druckdifferenz, an der die Messung erfolgt, zu erreichen,

22. Eine Vorrichtung mit den Merkmalen eines jeden der vorausgegangenen Ansprüche 12-21, die dadurch charakterisiert ist, dass die Sensor-Geräte (50) über mindestens zwei voneinander getrennte Sensoren (50) verfügen, so dass mindesten zwei Verpackungen (2,2', 2") zwischen die zwei folienartigen Oberflächen (3,4) gebracht werden können, um genauso viele Zwischenräume (6,6',6"), von denen jeder einen der besagten Sensoren (50) enthält, zu erhalten, während mit der Hilfe der Sensoren (56) die Druckänderung in jedem einzelnen Zwischenraum (6,6',6") gemessen werden kann, um zu bestimmen, ob die in Frage kommende Verpackung (2,2',2") leckt.

23. Eine Vorrichtung mit den Merkmalen eines jeden der Ansprüche 12-24, die dadurch charakterisiert ist, dass die Sensor-Geräte in einer Öffnung der folienartigen Oberfläche auf eine Weise angebracht sind, dass sich im wesentlichen mindestens eine Oberfläche der Sensor-Geräte innerhalb der folienartigen Oberfläche befindet.

24. Eine Vorrichtung mit den Merkmalen eines jeden der Ansprüche 12-23, die dadurch charakterisiert ist, dass eine folienartige Oberfläche (3,4) von einem Teil eines Förderbandes (81), von dem die zu prüfenden Verpackungen transportiert werden, gebildet wird.

25. Eine Vorrichtung mit den Merkmalen eines jeden der Ansprüche 12-26, die dadurch charakterisiert ist, dass die flexible Oberfläche (8,11) des Behälters (9,12) von einem Teil eines Förderbandes (82), von dem die zu Prüfenden Verpackungen (2,2',2") transportiert werden, gebildet wird.

## Revendications

1. Procédé de test d'au moins un emballage étanche aux gaz (2) rempli d'un produit particulier pour la présence d'une fuite, dans lequel l'emballage à tester est placé dans une enveloppe (5) étanche aux gaz et/ou aux liquides, qui comprend uns surface en forme de feuille (3, 4), une différence de pression entre la pression à l'extérieur et la pression à l'intérieur d'au moins une partie de l'enveloppe (5) est produite, de sorte qu'au moins une partie de l'enveloppe (5) vient reposer de façon étroite contre l'emballage (2) et dans lequel une pression présente dans l'espace (6) entre l'emballage (2) et l'enveloppe (5) est mesurée pour obtenir des résultats de test, dans lequel l'emballage (2) est placé entre les première et seconde surfaces en forme de feuille opposées (3, 4), au moins une partie de la première surface en forme de feuille (3) et au moins une partie de la seconde surface en forme de feuille (4) sont déplacées l'une vers l'autre, de sorte que ces parties se touchent et les surfaces en forme de feuille constituent, en combinaison, ladite enveloppe (5) au moins pendant la mesure, tandis qu'au moins une surface en forme de feuille (3, 4) est fixée à l'emballage (2) du fait de la différence de pression, **caractérisé par le fait qu'**au moins une des surfaces en forme de feuille (3, 4) est formée par une partie de l'extérieur d'une surface flexible (8) d'un récipient rempli de gaz (10).

2. Procédé selon la revendication 1, dans lequel l'emballage (2) à tester est flexible et est partiellement rempli d'un produit non gazeux, de sorte qu'une partie non remplie contenant du gaz est présente dans l'emballage (2), **caractérisé par le fait que**, avec l'enveloppe (5), une pression est appliquée à l'emballage (2) telle que le volume dans l'emballage (2) est réduit et la pression interne dans la partie de l'emballage (2) non remplie est accrue.

3. Procédé selon l'une des revendications 1 et 2, **caractérisé par le fait que** la seconde surface en forme de feuille (4) est fixée en exerçant sur deux parties des surfaces en forme de feuille (3, 4) des forces respectives de directions opposées et dirigées dans le plan de la dernière surface mentionnée.

4. Procédé selon l'une des revendications 1 à 3, **caractérisé par le fait que** les deux surfaces en forme de feuille (3, 4) forment chacune une partie d'une surface flexible (8, 11) d'un récipient rempli de gaz (9, 12).

5. Procédé selon l'une des revendications précédentes, **caractérisé par le fait que**, dans le récipient (9, 12), se trouve une pression superatmosphérique.

6. Procédé selon la revendication 5, **caractérisé par le fait que** la pression superatmosphérique dans le récipient (9, 12) est présente à la fois avant et pendant l'inclusion de l'emballage (2) dans l'enveloppe (5).

7. Procédé selon l'une des revendications 1 à 4, **caractérisé par le fait que** la différence de pression, dont l'effet est que l'emballage (2) est étroitement enveloppé et à laquelle intervient la mesure, est au moins obtenue en augmentant la pression dans le récipient (9, 12).

8. Procédé selon l'une des revendications 1 et 7, **caractérisé par le fait que** la différence de pression, dont l'effet est que l'emballage (2) est étroitement enveloppé et à laquelle intervient la mesure, est au moins obtenue en pressant l'une vers l'autre les deux surfaces en forme de feuille (3, 4).

9. Procédé selon l'une des revendications précédentes, **caractérisé par le fait que** la pression dans l'espace (6) est réduite pour obtenir ladite différence de pression à laquelle intervient la mesure.

10. Procédé selon l'une des revendications précédentes, **caractérisé par le fait qu'**au moins deux emballages (2, 2', 2") sont mis entre les deux surfaces en forme de feuille (3, 4) pour obtenir autant d'enveloppes (5, 5', 5"), tandis que dans chaque espace (6, 6', 6") d'une enveloppe (5, 5', 5") le changement de pression est mesuré pour tester si l'emballage placé dans l'enveloppe en question fuit.

11. Procédé selon la revendication 10, **caractérisé par le fait qu'**au moins l'un des emballages (2, 2', 2") placés entre les deux surfaces en forme de feuille (3, 4) est un emballage de référence (2), alors que le changement de pression dans l'espace (6, 6', 6") associé à l'emballage de référence est comparé au changement de pression dans l'espace associé à l'emballage à tester, pour détecter si l'emballage fuit.

12. Appareil (1) de test d'au moins un emballage (2) quant à la présence d'une fuite dans l'emballage (2), l'appareil (1) comprenant une enveloppe (5) en forme de feuille étanche aux gaz et/ou aux liquides, comprenant une surface en forme de feuille (3, 4) et dans laquelle l'emballage (2) à tester est placé en vue d'effectuer le test, des moyens de pression (28, 38) pour engendrer une différence de pression entre la pression à l'extérieur (7) et la pression à l'intérieur (6) d'au moins une partie de l'enveloppe (5), de sorte que, en fonctionnement, au moins une partie de l'emballage (2) est étroitement enveloppée par l'enveloppe (5), et des moyens capteurs (50) pour mesurer une pression présente dans l'espace (6) entre l'emballage (2) et l'enveloppe (5) en vue d'obtenir des résultats de test, l'appareil (1) comprenant des première et seconde surfaces flexibles en forme de feuille (3, 4) entre lesquelles, en fonctionnement, est placé un emballage (2) à tester, et des moyens pour déplacer au moins une partie de la première surface en forme de feuille (3) et au moins une partie de la seconde surface en forme de feuille (4) l'une vers l'autre, de sorte que ces parties se touchent et les surfaces en forme de feuille en combinaison constituent ladite enveloppe (5) au moins pendant la mesure, avec au moins une surface en forme de feuille (3, 4) fixée à l'emballage (2) sous l'effet de la différence de pression engendrée par les moyens de pression (28, 38), **caractérisé par le fait que** l'appareil (1) comprend au moins un récipient rempli de gaz (9, 12) avec une surface flexible (8, 11), dont une partie de l'extérieur forme l'une des dites surfaces en forme de feuille (3, 4).

13. Appareil selon la revendication 12, **caractérisé par le fait que** l'appareil comprend en outre une unité de commande (54) pour commander les moyens de pression (28, 38) et pour en outre traiter les résultats de mesure obtenus par le capteur (50).

14. Appareil selon la revendication 13, l'emballage (2) à tester étant flexible et partiellement rempli d'un produit non gazeux de sorte qu'une partie non remplie d'un contenu gazeux est présente dans l'emballage (2), **caractérisé par le fait que** l'unité de commande (54) commande les moyens de pression (28, 38) de façon que, avec l'enveloppe (5), une pression soit exercée sur l'emballage telle que le volume dans l'emballage soit réduit et la pression intérieur dans la partie non replie de l'emballage soit accrue.

15. Appareil selon l'une quelconque des revendications 12 à 14, **caractérisé par le fait que** l'appareil (1) comprend des moyens (28, 38) pour respectivement exercer des forces de directions opposées sur deux portions de l'une des surfaces en forme de feuille, de sorte que la surface en forme de feuille est fixée.

16. Appareil selon l'une des revendications 12 à 15, **caractérisé par le fait que** l'appareil comprend deux récipients (9, 12) qui sont chacun remplis de gaz et comprennent une surface flexible (8, 11) dont l'une des surface en forme de feuille (3, 4) constitue une partie.

17. Appareil selon l'une quelconque des revendications 12 à 16, **caractérisé par le fait que**, pendant la mesure, il règne une pression superatmosphérique dans le récipient (9, 12).

18. Appareil selon la revendication 17, **caractérisé par le fait que** la pression superatmosphérique dans le récipient (9, 12) règne à la fois avant et pendant l'inclusion de l'emballage (2) dans l'enveloppe (5).

19. Appareil selon la revendication 13, **caractérisé par le fait que** l'unité de commande (54) commande les moyens de pression (28, 38) de telle sorte qu'au moins la pression dans le récipient (9, 12) est accrue pour enfermer l'emballage (2) en butée d'enveloppement serré pour obtenir la différence de pression à laquelle intervient la mesure.

20. Appareil selon l'une quelconque des revendications 12 à 19, **caractérisé par le fait que** l'appareil (1) comprend en outre des moyens de déplacement (60) pour déplacer les surfaces en forme de feuille (3, 4) l'une vers l'autre et les écarter, tandis que la différence de pression, qui a pour effet que l'emballage (2) est étroitement enveloppé et à laquelle intervient la mesure, est au moins obtenue en pressant les deux surfaces en forme de feuille l'une vers l'autre à l'aide des moyens de déplacement (60).

21. Appareil selon l'une quelconque des revendications 12 à 20, **caractérisé par le fait que**, à l'aide des moyens de pression (38), la pression dans l'espace peut être réduite pour obtenir ladite différence de pression à laquelle intervient la mesure.

22. Appareil selon l'une quelconque des revendications 12 à 21, **caractérisé par le fait que** les moyens capteurs (50) comprennent au moins deux capteurs mutuellement séparés (50) de sorte que au moins deux emballages (2, 2', 2") peuvent être mis entre les deux surfaces en forme de feuille (3, 4) pour obtenir autant d'espaces (6, 6', 6") comprenant chacun l'un des capteurs (50), alors que, avec l'aide des capteurs (50), le changement de pression dans chaque espace individuel (6, 6', 6") peut être mesuré pour déterminer si l'emballage en question (2, 2', 2") fuit.

23. Appareil selon l'une quelconque des revendications 12 à 24, **caractérisé par le fait que** les moyens capteurs sont disposés dans une ouverture de la surface en forme de feuille, de telle sorte qu'une surface des moyens capteurs est au moins sensiblement située dans la surface en forme de feuille.

24. Appareil selon l'une quelconque des revendications 12 à 23, **caractérisé par le fait qu'**une surface en forme de feuille (3, 4) est formée par une partie d'une courroie convoyeuse (81) transportant les emballages à tester.

25. Appareil selon l'une quelconque des revendications 12 à 26, **caractérisé par le fait que** la surface flexible (8, 11) du récipient (9, 12) est formée par une partie d'une courroie convoyeuse (82) transportant les emballages (2, 2', 2") à tester.
